# EUROPÄISCHE PATENTSCHRIFT

(11) **EP 2 463 148 B1**
(45) Veröffentlichungstag und Bekanntmachung des Hinweises auf die Patenterteilung: **08.01.2014**
(21) Anmeldenummer: 11005944.1
(22) Anmeldetag: 20.07.2011
(51) Int. Cl.: B60P 3/36, B60P 3/38

(54) **Stauraumerweiterung für ein Campingfahrzeug**
Storage space expansion for a camping vehicle
Agrandissement de l'espace de rangement pour camping-car

(30) Priorität: 07.12.2010 DE 102010053705
(43) Veröffentlichungstag der Anmeldung: 13.06.2012
(73) Patentinhaber: Hymer AG, 88339 Bad Waldsee (DE)
(72) Erfinder: Wiest, Hansi, 88339 Bad Waldsee (DE)
(74) Vertreter: Otten, Herbert

(56) Entgegenhaltungen:
- DE-A1- 10 009 575
- DE-A1- 10 014 317
- DE-C1- 4 417 463
- DE-U1- 9 400 779
- DE-U1- 29 820 582
- DE-U1-202004 000 357

## Beschreibung

Die Erfindung betrifft ein Campingfahrzeug, insbesondere ein Wohnmobil, einen Wohnwagen oder einen Campingbus mit einer Rundsitzgruppe in einem Wohnbereich und einem unterhalb zumindest einem Teil der Rundsitzgruppe liegenden, vom Wohnbereich durch einen Wandaufbau getrennten Stauraum.

Bei Campingfahrzeugen, beispielsweise Wohnmobilen oder Wohnwägen ist es üblich, von außen beladbare Stauräume vorzusehen, welche durch eine öffenbare Luke am Campingfahrzeug beladbar sind. Derartige Stauräume werden oftmals als eine Art Garage genutzt, um beispielsweise Fahrräder, Kleinkrafträder oder auch andere sperrige Gegenstände wie beispielsweise Campingtisch und Campingstühle darin unterzubringen. Um dies zu ermöglichen müssen die entsprechenden Stauräume stets eine gewisse Höhe aufweisen, damit beispielsweise ein Fahrrad hineingeschoben werden kann. Dies geht jedoch oftmals zu Lasten des zur Verfügung stehenden wohnraums im Campingfahrzeug.

Aus dem Stand der Technik, beispielsweise aus der DE 100 09 575 A1 ist ein Stauraum bekannt, welcher sich zeitweise ganz oder teilweise in den für Wohnzwecke genutzten Innenraum des Campingfahrzeugs integrieren lässt. Dies wird dadurch erreicht, dass zumindest eine der, den Stauraum zum Innenraum hin abgrenzenden Wände zumindest teilweise entfernbar ist, und so das Stauraumvolumen zur Nutzung für den Wohnbereich frei gibt.

Nachteilig an den bekannten Ausgestaltungen des Stauraums ist, dass sie bei der Innenraumeinrichtung des Wohnbereichs oftmals erhebliche Einschränkungen mit sich bringen, da beispielsweise im Bereich der Stauraumanordnung nur eingeschränkt Sitz- oder Liegemöbel oder gar ein Schrank angeordnet werden kann. Insbesondere bei Campingfahrzeugen ist jedoch erwünscht, immer mehr Wohnkomfort bereitzustellen, was vornehmlich durch komfortable Einrichtungsgegenstände und Möbelarrangements realisiert werden soll.

Aufgabe der Erfindung ist es daher einen großen Stauraum für ein Campingfahrzeug zur Verfügung zu stellen, welcher im Bedarfsfall beispielsweise zur Aufnahme von Fahrrädern, Kleinkrafträdern oder der gleichen geeignet ist, ohne im Wohnbetrieb des Campingfahrzeugs erhebliche Einschränkungen bei der Inneneinrichtung in Kauf nehmen zu müssen.

Erfindungsgemäß wird diese Aufgabe ausgehend vom Oberbegriff des Patentanspruchs 1 durch den kennzeichnenden Teil des Patentanspruchs 1 gelöst. Vorteilhafte Weiterbildungen sowie zweckmäßige Ausgestaltungen sind in den abhängigen Patentansprüchen angegeben.

Beim erfindungsgemäßen Campingfahrzeug, insbesondere Wohnmobil, Wohnwagen oder Campingbus ist in einem Wohnbereich eine Rundsitzgruppe vorgesehen, wobei unterhalb zumindest einem Teil der Rundsitzgruppe ein vom Wohnbereich durch einen Wandaufbau getrennter Stauraum mit einem Stauraumboden, Stauraumwänden sowie mindestens einer Stauraumluke und einem Stauraumdach vorgesehen ist, und wobei das Stauraumdach zumindest einen Teil der Sitzfläche der Rundsitzgruppe bildet. Erfindungsgemäß ist der Stauraum dadurch gekennzeichnet, dass das Stauraumdach durch Hubmittel in den Wohnbereich hinein angehoben werden kann, um den Stauraum zu vergrößern.

Während des Wohnbetriebs des Campingwagens ist das Stauraumdach üblicherweise abgesenkt, sodass es sich auf einer Höhe einer Sitzfläche befindet. Auf diese Weise kann das Stauraumdach beispielsweise bequem in eine Rundsitzgruppe integriert werden, da üblicherweise im Wohnbetrieb im Stauraum gelagerte Fahrräder oder ähnliches außerhalb des Campingfahrzeugs aufbewahrt werden können. Im Transportbetrieb wird das Stauraumdach durch vorgesehene Hubmittel in den Wohnbereich hinein angehoben, so dass der Stauraum erheblich vergrößert wird, um entsprechende Gegenstände aufzunehmen. Das Stauraumdach steht nunmehr nicht als Sitzfläche zur Verfügung, da es im Innenraum des Fahrzeugs nach oben angehoben ist.

Die Erfindung ist nicht auf die Verwendung des erfindungsgemäßen Gedanken in einer Rundsitzgruppe beschränkt. Grundsätzlich lässt sich der erfindungsgemäße Gedanke auch auf Längsbänke, Querbänke und andere Art von Möbelanordnungen übertragen, welche an einer geeigneten, für einen hohen Stauraum zugänglichen Position angeordnet sind.

In einer zweckmäßigen Weiterbildung des erfindungsgemäßen Campingfahrzeugs ist vorgesehen, dass mindestens eine Stauraumwand mehrlagig, insbesondere zweilagig oder dreilagig ausgebildet ist. Dabei ist eine stauraumseitig innenliegende erste Lage mit dem Stauraumboden verbunden, eine stauraumaußenseitig außen liegende zweiten Lage mit dem Stauraumdach und vorzugsweise noch eine dritte stauraumseitig weiter außen liegende, im Wohnbereich verankerte dritte Lage vorgesehen, wobei die mit Stauraumdach verbundene zweite Lage zumindest teilweise zwischen der ersten und der dritten Lage geführt ist.

Durch den erfindungsgemäßen sandwichartigen Aufbau dreier Wandlagen, von welchen die mittlere mit dem angehobenen Stauraumdach verbunden ist wird sowohl stauraumseitig als auch wohnbereichsseitig erreicht, dass eine angenehm anmutende Optik im Wohnraum und im Stauraum vorliegt. Außerdem werden Probleme aufgrund von zugänglich übereinander gleitenden Wandflächen vermieden, sodass sich beispielsweise keine Gegenstände verfangen, blockieren, oder Körperteile eingeklemmt werden können.

In einer über diese zweckmäßigen Ausgestaltung der Erfindung ist vorgesehen, dass das Stauraumdach an mindestens einer Seitenkante gleitend an einer Außenwand des Campingfahrzeugs vorbeigeführt wird, wobei vorzugsweise reibungshindernde Führungsmittel wie beispielsweise Bürstenaufsätze, Schienenoder Rollenführungen oder der gleichen an der mindestens einen Seitenkante vorgesehen sind.

Das zun Anheben uns Absinken bewegte Stauraumdach gleitet innenseitig an einer Außenwand des Campingfahrzeugs entlang, ohne diesbezüglich erheblichen Reibungswiderstand, beispielsweise an einem Wandteppich zu verursachen. Es ist jedoch erforderlich, dass keine Gegenstände in den Gleitbereich eingeklemmt werden können, da dies zweifelsohne zu Funktionsstörungen bis hin zum Funktionsausfall führen könnte. Entsprechende reibungsverhindernde Führungsmittel gewährleisten dies.

In einer weiteren zweckmäßigen Ausgestaltung der Erfindung wird das Stauraumdach über eine Schwenkbewegung angehoben. Es ist möglich, dies über eine Art Kniehebelgelenk oder Scherengelenk zu realisieren und das Stauraumdach über eine radiale Schwenkbewegung von einer unteren ersten Position in eine obere zweite Position anzuheben, ähnlich wie es beispielsweise bei bekannten Campingfahrzeugen in Alkovendächern bereits praktiziert wird.

In einer weiteren zweckmäßigen Ausgestaltung ist vorgesehen, dass das Stauraumdach über eine Linearbewegung angehoben wird.

Das lineare Anheben des Stauraumdachs über eine Linearbewegung bietet den Vorteil, dass im Inneren des Wohnbereichs lediglich die Flucht der Hubbewegung des Stauraumdachs frei von Einrichtungsgegenständen gehalten werden muss, und kein zusätzlicher freier Raum für weitere Bewegungsabläufe vorgesehen werden muss.

In einer weiteren zweckmäßigen Ausgestaltung des erfindungsgemäßen Campingfahrzeugs ist über dies vorgesehen, dass das Stauraumdach über mindestens einen linearen Huberzeuger, insbesondere über mindest einen hydraulischen Hubzylinder oder mindestens eine Gewindespindel angehoben wird.

Lineare Huberzeuger, beispielsweise hydraulische Hubzylinder oder Gewindespindeln mit darauf laufenden Führungsschlitten bieten den Vorteil, dass sie aufgrund der entsprechend gewählten Übersetzung geeignet sind, ausreichende Hubkräfte bei entsprechend langsamer Hubbewegung auf das Stauraumdach auszuüben, sodass beispielsweise darauf liegende Polster oder sonstige Gegenstände unproblematisch mit angehoben werden können. Außerdem ist eine weitestgehende Automatisierung über derartige Bauelemente möglich. Zudem sind sie aufgrund ihrer Längsform kompakt verbaubar und können somit gut in ein Campingfahrzeug integriert werden.

In einer weiteren zweckmäßigen Ausgestaltung des erfindungsgemäßen Campingfahrzeugs ist vorgesehen, dass eine manuelle Vorrichtung zur Betätigung der Hubmittel, insbesondere eine Kurbel oder der gleichen und/oder eine elektrische Vorrichtung zur Betätigung der Hubmittel, insbesondere ein Elektromotor oder ein Elektrokompressor vorgesehen ist.

Soweit möglich wird beim erfindungsgemäßen Campingfahrzeug eine automatisierte Hubvorrichtung als Hubmittel vorgesehen sein. Es besteht jedoch die Möglichkeit, dass aufgrund eines technischen Defekts oder nicht ausreichend zur Verfügung stehender elektrischer Energie manuelle Hubbewegung auszuführen ist. Auf diese Weise können über manuelle Vorrichtungen der eingangsgenannten Art die entsprechenden Hubmittel ebenfalls betätigt werden.

In einer weiteren zweckmäßigen Ausbildung des erfindungsgemäßen Campingfahrzeugs ist vorgesehen, dass Stauraumdach im Innenraum als Sitzfläche und im angehobenen Zustand als Liegefläche, insbesondere als Hochbett nutzbar ist.

Die Nutzung als Sitzfläche in einer ersten unteren Position und die Nutzung als Hochbett in einer zweiten oberen Position bieten verschiedene Möglichkeiten der Innenraumnutzung des Wohnbereichs dar, sodass beispielsweise auch ein dauerhaftes Belassen des Stauraumdachs in der zweiten oberen Position durchaus auch eine Einsatzalternative im Campingbetrieb darstellt.

Eine weitere zweckmäßige Ausgestaltung ist dadurch gekennzeichnet, dass das Stauraumdach mindestens eine, vorzugsweise zwei aufgesetzte Seitenwände und eine aufgesetzte Rückwand umfasst, welche mit dem Stauraumdach eine Querbank im Heckbereich eines Campingfahrzeugs ausbilden, wobei die Querbank vollständig in den Wohnbereich hinein angehoben werden kann und vorzugsweise mit mindestens einer Seitenwand und/oder der Rückwand mindestens ein Außenfenster im angehobenen Zustand zumindest teilweise verdeckt.

Soweit das Stauraumdach erfindungsgemäß in der Art einer Sitzmulde mit angeordneten Seitenwänden und einer Rückwand bzw. Rückenlehne ausgebildet ist besteht die Möglichkeit, dass die vollständige Sitzmulde mit dem Stauraumdach angehoben wird, und so beispielsweise zur Verdeckung von Außenfenstern geeignet ist. Dies kann einerseits der Verdunkelung, andererseits auch dem Sicht- oder Einbruchsschutz dienen.

In einer weiteren zweckmäßigen Ausgestaltung des erfindungsgemäßen Campingfahrzeugs ist über dies vorgesehen, dass das Stauraumdach über daran befestigte Mittel zur Ladungssicherung, insbesondere ein Ladungs-Sicherungsnetz verfügt, welches insbesondere bei angehobenem Stauraumdach darauf liegende Ladungsbestandteile gegen unerwünschte Bewegung sichert.

Soweit das Stauraumdach angehoben wird stellen darauf liegende Gegenstände eine Gefahr während der Fahrt dar, da diese nunmehr auf einer höheren Position liegen und beispielsweise bei einer Bremsung durch den Wohnraum fliegen können. Um dies zu vermeiden verfügt das erfindungsgemäße Campingfahrzeug über Mittel zur Ladungssicherung, welche insbesondere bei angehobenen Stauraumdach über die zu lagernde Gegenstände angeordnet werden, und fest mit dem Stauraumdach und/oder umliegenden festen Wohnraumbestandteilen verbunden sind.

Das erfindungsgemäße Campingfahrzeug soll im folgenden Ausführungsbeispiel näher erläutert werden. Die Erfindung ist jedoch nicht auf die dargestellte Ausführungsform beschränkt, sie umfasst vielmehr all diejenigen Ausgestaltungen welche vom erfindungswesentlichen Gedanken Gebrauch machen.

Es zeigen dabei
- Figur 1: eine schematische Seitenansicht eines Campingfahrzeugs,
- Figur 2: einen Grundriss eines schematisch dargestellten Campingfahrzeugs,
- Figur 3: eine dreidimensionale Darstellung einer Rundsitzgruppe,
- Figur 4: eine Frontalansicht der Hubanordnung für das Stauraumdach,
- Figur 5: eine Seitenansicht der Hubanordnung für das Stauraumdach.

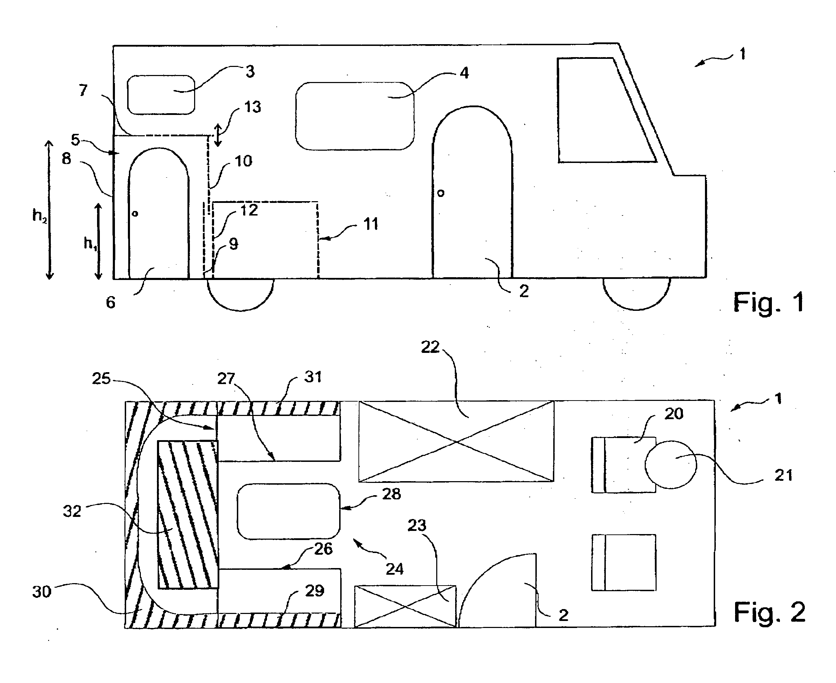

Im Einzelnen zeigt Figur 1 ein Campingfahrzeug 1 welches vorliegend in der Art eines voll integrierten Wohnmobils angedeutet ist. Das Campingfahrzeug 1 verfügt über einen Eingang 2 sowie Fenster 3, 4 sowie einen Stauraum 5, welcher von außen durch eine Stauraumluke 6 beladbar ist. Im Innenbereich ist eine später in Figur 2 näher dargestellte Rundsitzgruppe realisiert, wobei vorliegend in Figur 1 die relevanten Bestandteile der Rundsitzgruppe als gestrichelte Linien dargstellt sind. Der Stauraum 5 weist an seinem oberen Ende ein Stauraumdach 7 auf und ist rückseitig durch die Heckwand 8 und vorderseitig durch eine erste untenliegende, mit dem Stauraumboden verbundene erste Wand 9 begrenzt. Am Stauraumdach 7 ist eine zweite Wand 10 in vertikaler Richtung derart angeordnet, dass sie stauraumaußenseitig hinter die erste Wand 9 eingreift. Die Längsbank 11 der Rundsitzgruppe weist wiederum eine dritte Wand 12 auf, welche die zweite Wand 10 wohnraumseitig überragt, sodass die zweite Wand 10 zwischen die erste Wand 9 und die dritte Wand 12 bei Absenken des Stauraumdachs 7 entlang einer Hubbewegung 13 eingreifen kann.

Der Stauraum 5 kann durch Anheben des Stauraumdachs 7 und der daran verbundenen zweiten Wand 10 in Richtung der Hubbewegung 13 von einer ersten Höhe h1 als Sitzbankfunktion in eine zweite Höhe H2 als Transportfunktion und/oder Hochbettfunktion variabel vergrößert oder verkleinert werden.

Figur 2 zeigt eine schematische Draufsicht eines Grundrisses eines erfindungsgemäßen Campingfahrzeugs 1. Im vorderen Bereich weist das Campingfahrzeug 1 einen Fahrersitz 20 mit einem Lenkrad 21 auf. Im Innenraum sind schematisch Möbel 22 sowie 23 angedeutet ohne näher auf deren Funktion eingehen zu müssen. Im Heckbereich des erfindungsgemäßen Campingfahrzeugs 1 ist eine Rundsitzgruppe 24 angeordnet, welche aus einer heckseitigen Querbank 25 sowie zwei Längsbänken 26, 27 besteht. Im Innenbereich der Rundsitzgruppe 24 befindet sich ein Tisch 28. Die Rundsitzgruppe 24 bestehend aus der Querbank 25, der Längsbank 26 sowie der Längsbank 27 und weist in ihrem Außenwandbereich Polster 29, 30 sowie 31 auf.

Nicht permanent angeordnet jedoch vorgesehen ist auch ein Sicherungsnetz 32, welches beispielsweise an der Vorderkante der Querbank 25 befestigt sein kann, nach hinten in Richtung der Polster 30 abgespannt wird, und so zur Sicherung von transportierten Gegenständen insbesondere im auf die Höhe h2 angehobenen Zustand des Stauraumdachs 7 dient.

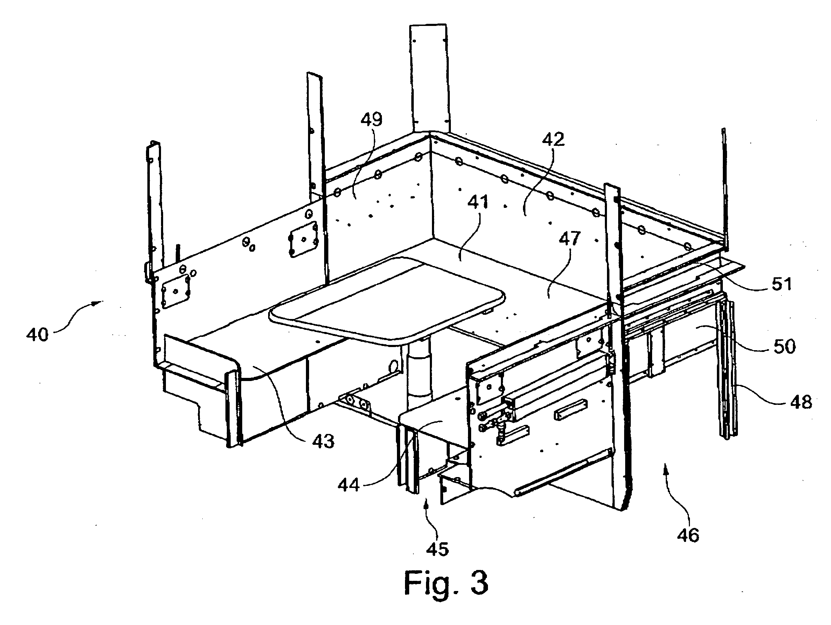

Figur 3 zeigt eine detailliertere Darstellung der erfindungsgemäßen Anordnung in einer Rundsitzgruppe 40, wobei vorliegend keine Polster oder der gleichen bzw. keine Wände des Campingsfahrzeugs dargestellt sind. Die Rundsitzgruppe 40 umfasst eine Querbank 41 mit einer Rückenlehne 42 sowie Längsbänken 43 und 44 mit jeweils daran angeordneten Rückenlehnen. Unterhalb der Längsbänke befindet sich je ein kleiner Stauraum 45, unterhalb der Querbank 41 der erfindungsgemäß vergrößerbare Stauraum 46. Die Sitzfläche 47 der Querbank 41 stellt das Stauraumdach dar, und ist in Hubführungen 48 durch entsprechende Hubmittel (hier nicht gezeigt) vertikal verschiebbar. Bei der vertikalen Verschiebung werden sowohl die Sitzfläche 47 als auch die daran angeordnete Rückenlehne 42 und die seitlich angeordneten Seitenlehnen 49 sowie 50 angehoben. Im Bereich der Seitenlehne sowie der Rückenlehne sind an den oberen Kanten Gleitbesen 51 vorgesehen, welche die Hubbewegung sauber entlang der Innenwand eines Campingfahrzeugs führen, und gleichzeitig ein Verklemmen durch hineinrutschende Gegenstände und/oder Körperteile verhindern.

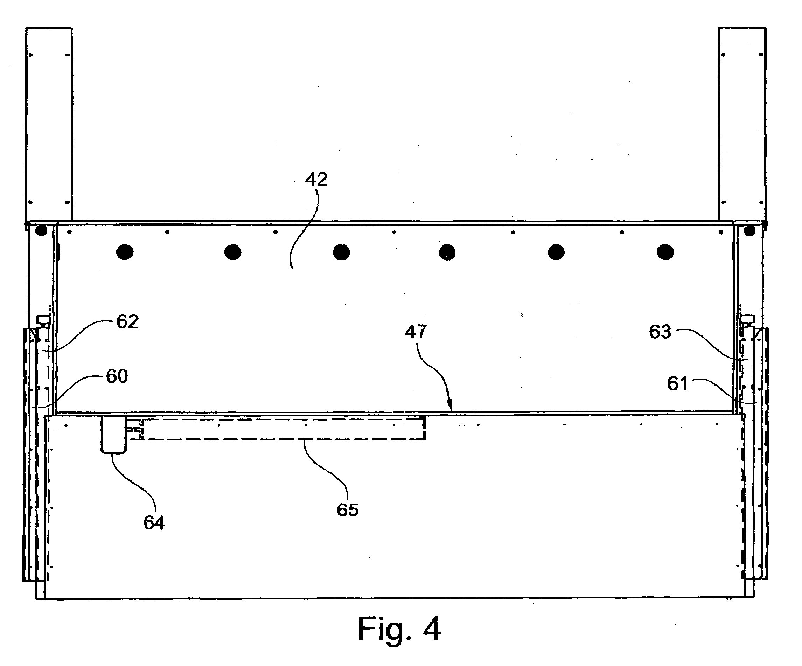

Figur 4 zeigt eine Frontalansicht der Hubmittel der Querbank 41 nach Figur 3.

Links- sowie rechtsseitig der Sitzfläche 47 sind Führungsschienen 60 sowie 61 angeordnet, welche die Hubbewegung der Sitzfläche 47 führen. Neben den Führungsschienen sind des Weiteren Hubzylinder 62 sowie 63 vorgesehen, welche vorliegend als hydraulische Hubzylinder ausgebildet sind. Unterhalb der Sitzfläche 47 befindet sich ein Motor 64 sowie ein Hydraulik-Kompressor 65, welcher den entsprechenden Arbeitsdruck für die hydraulischen Hubzylinder 62 sowie 63 bereitstellt.

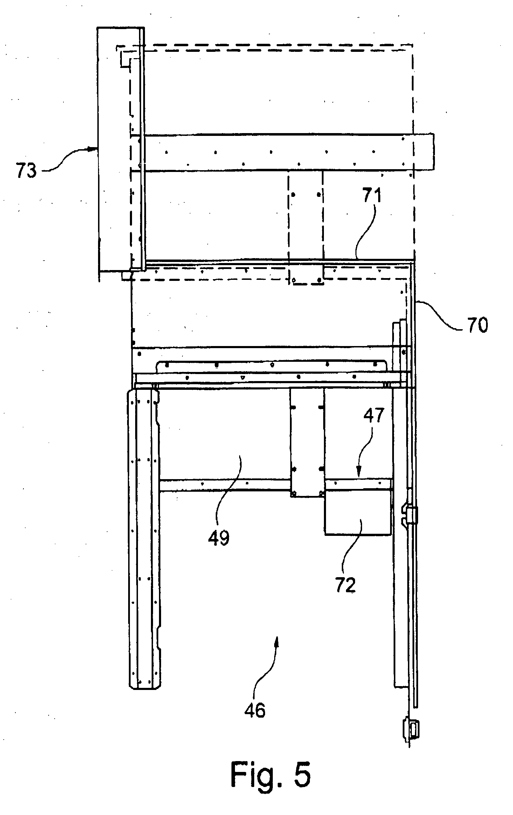

Figur 5 zeigt eine weitere Darstellung in einer linksseitigen Ansicht der hinteren Querbank mit anhebbarem Stauraumdach, wobei das Stauraumdach durch die Sitzfläche 47 gebildet wird.

Zum Wohnraum hin wird der Stauraum 46 durch einen seitlichen Rahmen 70 sowie ein Rahmenoberteil 71 seitlich verblendet. Ein Huberzeuger 72 sorgt für die entsprechende Hubbewegung des Stauraumdachs und damit der Sitzfläche 47.

Gestrichelt dargestellt in Figur 5 ist das angehobene Stauraumdach auf eine Höhe h2, wobei ein Fensterrahmen 73 sodann durch die Rückenlehne 42 innenseitig verschlossen wird, um beispielsweise eine Verblendung und/oder eine Abschattung bereitstellen zu können.

**Bezugszeichenliste:**

| | | | |
|---|---|---|---|
| 1 | Campingfahrzeug | 51 | Gleitbesen |
| 2 | Eingang | 60 | Führungsschiene |
| 3 | Fenster | 61 | Führungsschiene |
| 4 | Fenster | 62 | Hubzylinder |
| 5 | Stauraum | 63 | Hubzylinder |
| 6 | Stauraumluke | 64 | Motor |
| 7 | Stauraumdach | 65 | Hydraulik-Kompressor |
| 8 | Heckwand | 70 | Rahmen |
| 9 | erste Wand | 71 | Rahmenoberteil |
| 10 | zweite Wand | 72 | Huberzeuger |
| 11 | Rundsitzgruppe | 73 | Fensterrahmen |
| 12 | dritte Wand | | |
| 13 | Hubbewegung | | |
| 20 | Fahrersitz | | |
| 21 | Lenkrad | | |
| 22 | Möbel | | |
| 23 | Möbel | | |
| 24 | Rundsizzgruppe | | |
| 25 | Querbank | | |
| 26 | Längsbank | | |
| 27 | Langsbank | | |
| 28 | Tisch | | |
| 29 | Polster | | |
| 30 | Polster | | |
| 31 | Polster | | |
| 32 | Sicherungsnetz | | |
| 40 | Rundsitzgruppe | | |
| 41 | Querbank | | |
| 42 | Rückenlehne | | |
| 43 | Längsbank | | |
| 44 | Längsbank | | |
| 45 | Stauraum | | |
| 46 | Stauraum | | |
| 47 | Sitzfläche | | |
| 48 | Hubführungen | | |
| 49 | Seitenlehne | | |
| 50 | Seitenlehne | | |

## Patentansprüche

1. Campingfahrzeug (1), insbesondere Wohnmobil, Wohnwagen oder Campingbus mit einer Rundsitzgruppe (24, 40) in einem Wohnbereich und einem unterhalb zumindest einem Teil der Rundsitzgruppe (24, 40) liegenden, vom Wohnbereich durch einen Wandaufbau getrennten Stauraum (5, 45) mit einem Stauraumboden, Stauraumwänden sowie mindestens einer Stauraumluke (6) und einem Stauraumdach (7), wobei das Stauraumdach (7) zumindest einen Teil einer Sitzfläche (25, 41) der Rundsitzgruppe (24, 40) bildet, **dadurch gekennzeichnet, dass** das Stauraumdach (7) durch Hubmittel in den Wohnbereich hinein angehoben werden kann, um den Stauraum zu vergrößern und dass das Stauraumdach (7) im abgesenkten Zustand im Innenraum des Fahrzeugs als Sitzfläche der Rundsitzgruppe (24, 40) und im angehobenen Zustand als Liegefläche nutzbar ist.

2. Campingfahrzeug nach Anspruch 1, **dadurch gekennzeichnet, dass** mindestens eine Stauraumwand mehrlagig, insbesondere zweilagig oder dreilagig ausgebildet ist, wobei eine stauraumseitig innen liegende erste Lage mit dem Stauraumboden verbunden ist und eine stauraumseitig außen liegende zweite Lage mit dem Stauraumdach verbunden ist und eine dritte Stauraumseitig weiteraußen liegende, im Wohnbereich verankerte dritte Lage vorgesehen ist, und die mit dem Stauraumdach verbundene zweite Lage zumindest teilweise zwischen der ersten und der dritteln Lage geführt ist.

3. Campingfahrzeugnach einem der Ansprüche 1 oder 2, **dadurch gekennzeichnet, dass** das Stauraumdach an mindestens einer Seitenkante gleitend an einer Außenwand des Campingfahrzeugs vorbeigeführt wird, wobei reibungshindernde Führungsmittel wie beispielsweise Bürstenaufsätze, Schlenenoder Rollenführungen oder dergleichen an der mindestens einen Seitenkante vorgesehen sind.

4. Campingfahrzeug nach einem der Ansprüche 1 bis 3, **dadurch gekennzeichnet, dass** das Steuraumdach über eine Schwenkbewegung angehoben wird.

5. Campingfahrzeug nach einem der Ansprüche 1 bis 4, **dadurch gekennzeichnet, dass** das Stauraumdach Ober eine Unearbewegung angehoben wird.

6. Campingfahrzeug nach einem der Ansprüche 1 bis 5, **dadurch gekennzeichnet, dass** das Stauraumdach Ober mindestens einen linearen Huberzeuger, wie hydraulischen Hubzylinder oder Gewindespindel angehoben wird.

7. Campingfahrzeug nach einem der Ansprüche 1 bis 6, **dadurch gekennzeichnet, dass** eine manuelle Vorrichtung zur Betätigung der Hubmittel, wie Kurbel oder dergleichen und/oder eine elektrische Vorrichtung zur Betätigung der Hubmittel, wie Elektromotor oder ein Elektrokompressor vorgesehen ist.

8. Campingfahrzeug nach einem der Ansprüche 1 bis 7, **dadurch gekennzeichnet, dass** das Stauraumdach im Innenraum als Sitzfläche und im angehobenen Zustand als Hochbett nutzbar ist.

9. Campingfahrzeug nach einem der Ansprüche 1 bis 8, **dadurch gekennzeichnet, dass** das Stauraumdach mindestens eine, vorzugsweise zwei aufgesetzte Seitenwände und eine aufgesetzte Rückwand umfasst, welche mit dem Stauraumdach eine Querbank im Heckbereich des Campingfahrzeugs ausbilden, wobei die Querbank vollständig in den Wohnbereich hinein angehoben werden kann und vorzugsweise mit mindestens einer Seitenwand und/ oder der Rückwand mindestens ein Außenferster im angehobenen Zustand zumindest teilweise verdeckt.

10. Campingfahrzeug nach einem der Ansprüche 1 bis 9, **dadurch gekennzeichnet, dass** das Stauraumdach daran befestigte Mittel zur Ladungssicherung, ein Ladungs-Sicherungsnetz umfasst, welche insbesondere bei angehobenem Stauraumdach darauf liegende Ladungsbestandteile gegen unerwünschte Bewegung sichern.

## Claims

1. Camping vehicle (1), in particular a camper, trailer or camping van having a round seating group (24, 40) in a living area and a storage space (5, 45) lying underneath at least one part of the round seating group (24, 40) separated from the living area by a wall structure, having a storage space floor, storage space walls as well as at least one hatch (6) and a storage space top (7), where the storage space top (7) forms at least a part of a seat (25, 41) of the round seating group (24, 40), **characterized in that** the storage space top (7) can be raised by a lifting means into the living area, in order to enlarge the storage space and that the storage space top (7) can be used in the lowered state in the interior space of the vehicle as a seat and in the raised condition as a lying surface.

2. A camping vehicle according to claim 1, **characterized in that** at least one storage space wall is designed multilayered, in particular, double-layered or triple-layered, wherein an storage space side internal first layer is connected with the storage space floor and a storage space side external second layer is connected with the storage space top and a storage space side external third layer is provided, anchored in the living area, and the second layer connected with the storage space top is guided at least partially between the first and the second layer.

3. A camping vehicle according to one of claims 1 or 2, **characterized in that** the storage space top is guided past at least one side edge sliding to an outer wall of the camping vehicle, wherein friction-impeding guiding means such as for example brush attachments, rails or roller guides or the like are provided on the at least one side edge.

4. A camping vehicle according to one of claims 1 to 3, **characterized in that** the storage space top is raised via a swiveling movement.

5. A camping vehicle according to one of claims 1 to 4, **characterized in that** the storage space top is raised via a linear movement.

6. A camping vehicle according to one of claims 1 to 5, **characterized in that** the storage space top is raised via at least one lifting generator, such as a hydraulic lifting cylinder or threaded spindle.

7. A camping vehicle according to one of claims 1 to 6, **characterized in that** a manual device for activating the lifting means, such as a crank or the like and/or an electrical device for activating the lifting means, such as an electric motor or an electric compressor is provided.

8. A camping vehicle according to one of claims 1 to 7, **characterized in that** the storage space top can be used in the interior space as a seat and in the raised state as a loft bunk.

9. A camping vehicle according to one of claims 1 to 8, **characterized in that** the storage space top includes at least one, preferably two attached side walls and one attached rear wall, which with the storage space top form a cross-bench in the rear area of the camping vehicle, wherein the cross-bench can be raised completely into the living area and preferably with at least one side wall and/or the rear wall at least partially covers least one external window in the raised state.

10. A camping vehicle according to one of claims 1 to 9, **characterized in that** the storage space top includes means mounted thereon for securing loads, a load-securing net , which in particular when the storage space top is raised secure load components lying on top of it against undesired movement.

## Revendications

1. Véhicule de camping (1), en particulier motorhome, caravane ou camping-car comprenant un ensemble circulaire table et fauteuils (24, 40) dans un espace d'habitation et un espace de rangement (5, 45) situé en dessous d'au moins une partie de l'ensemble circulaire table et fauteuils (24, 40), séparé de l'espace d'habitation par une structure de paroi, comprenant un plancher d'espace de rangement, des parois d'espace de rangement et au moins une lucarne d'espace de rangement (6) et un toit d'espace de rangement (7), étant entendu que le toit de l'espace de rangement (7) forme au moins une partie d'une surface d'assise (25, 41) de l'ensemble circulaire table et fauteuils (24, 40), **caractérisé en ce que** le toit de l'espace de rangement (7) peut être soulevé à l'intérieur de l'espace d'habitation à l'aide de moyens de levage pour agrandir l'espace de rangement et **en ce que** le toit de l'espace de rangement (7) peut être utilisé, dans la position abaissée dans l'habitacle du véhicule, comme surface d'assise de l'ensemble circulaire table et fauteuils (24, 40), et dans la position levée, comme surface de couchage.

2. Véhicule de camping selon la revendication 1, **caractérisé en ce qu'**au moins une paroi de l'espace de rangement est réalisée en plusieurs couches, en particulier avec deux ou trois couches, étant entendu qu'une première couche située à l'intérieur du côté de l'espace de rangement est reliée avec le plancher de l'espace de rangement et une deuxième couche située à l'extérieur du côté de l'espace de rangement est reliée avec le toit de l'espace de rangement, qu'il est prévu une troisième couche située plus à l'extérieur du côté de l'espace de rangement, ancrée dans l'espace d'habitation, et que la deuxième couche reliée avec le toit de l'espace de rangement est guidée au moins partiellement entre la première et la troisième couches.

3. Véhicule de camping selon l'une des revendications 1 ou 2, **caractérisé en ce que** le toit de l'espace de rangement est guidé de façon coulissante, au niveau d'au moins une arête latérale, devant une paroi extérieure du véhicule de camping, étant entendu que des moyens de guidage prévenant les frottements, comme par exemple des applications de brosses, des rails ou des galets de guidage ou des moyens similaires, sont prévus sur l'au moins une arête latérale.

4. Véhicule de camping selon l'une des revendications 1 à 3, **caractérisé en ce que** le toit de l'espace de rangement est levé au moyen d'un mouvement de pivotement.

5. Véhicule de camping selon l'une des revendications 1 à 4, **caractérisé en ce que** le toit de l'espace de rangement est levé au moyen d'un mouvement linéaire.

6. Véhicule de camping selon l'une des revendications 1 à 5, **caractérisé en ce que** le toit de l'espace de rangement est levé au moyen d'au moins un générateur de course linéaire, comme un vérin de levage hydraulique ou une vis filetée.

7. Véhicule de camping selon l'une des revendications 1 à 6, **caractérisé en ce qu'**il est prévu un dispositif manuel pour actionner les moyens de levage, comme une manivelle ou un dispositif similaire, et/ou un dispositif électrique pour actionner les moyens de levage, comme un moteur électrique ou un compresseur électrique.

8. Véhicule de camping selon l'une des revendications 1 à 7, **caractérisé en ce que** le toit de l'espace de rangement peut être utilisé dans l'habitacle comme surface d'assise, et dans la position levée, comme lit en mezzanine.

9. Véhicule de camping selon l'une des revendications 1 à 8, **caractérisé en ce que** le toit de l'espace de rangement comprend au moins une, et de préférence deux parois latérales appliquées et une paroi arrière appliquée, qui forment en conjonction avec le toit de l'espace de rangement un banc transversal dans la zone arrière du véhicule de camping, étant entendu que le banc transversal peut être levé entièrement dans l'espace d'habitation, et de préférence, en conjonction avec au moins une paroi latérale et/ou la paroi arrière, il recouvre au moins partiellement au moins une fenêtre extérieure dans la position levée.

10. Véhicule de camping selon l'une des revendications 1 à 9, **caractérisé en ce que** le toit de l'espace de rangement comprend des moyens fixés dans celui-ci pour sécuriser le chargement, comme un filet de sécurité pour bagages, qui en particulier lorsque le toit de l'espace de rangement est dans la position levée, protègent les éléments de chargement qui s'y trouvent contre un déplacement indésirable.
